# EUROPEAN PATENT APPLICATION

(11) **EP 3 581 021 A1**
(43) Date of publication of application: **18.12.2019**
(21) Application number: 19180095.2
(22) Date of filing: 13.06.2019
(51) Int. Cl.: A01G 9/04, B65D 1/36, B65D 71/70

(54) **TRAY FOR POT PLANTS AND METHOD FOR MANUFACTURING SUCH TRAY**

(30) Priority: 13.06.2018 NL 2021111
(71) Applicant: Huhtamaki Molded Fiber Technology B.V., 8801 JB Franeker (NL)
(72) Inventor: Veenje, Sandor Klaas, 8711 LM Workum (NL)
(74) Representative: Verdijck, Gerardus

(57) **Abstract**

The present invention relates to a tray for pot plants and method for manufacturing such tray. The tray according to the invention comprises:
- a carrier part provided with a number of pot plant receiving compartments, wherein the carrier part is made from a moulded pulp;
- a number of clamping elements for clamping the pot plants in one of the pot plant receiving compartments,
wherein the clamping elements are configured to receive and clamp pots of different sizes in a plant receiving compartment. Preferably, the tray comprises:
- at least one drain opening for removing an excess of water from the tray; and at least one drain element for transport of the excess of water to the at least one drain opening.

## Description

The present invention relates to trays for pot plants. These trays are used for transport and display of pot plants including ornamental plants, herbs, herbal plants and vegetable plants.

Trays for pot plants are commonly used in the horticultural sector and most of these trays are being disposed after use. These trays are often manufactured from polyethylene or polypropylene material. In The Netherlands alone more than 150 million of these trays are being produced each year.

Manufacturing the trays from recyclable material results in problems relating to strength and stability of the tray for pot plants during use. Often, these trays are being used in (cold) storage rooms, transport facilities and/or subjected to an environment with a relatively high humidity. This may reduce the strength and stability of the trays.

The present invention has for its object to obviate or at least reduce the above stated problems with conventional trays for pot plants and to provide a tray that can be recycled and better maintains its strength and stability during use.

For this purpose, the present invention provides a tray for pot plants according to claim 1.

The tray for pot plants of the invention comprises a carrier part that contains a number of pot plant receiving compartments. The number of compartments may depend on the design and size of the tray. For example, 6, 8, 10, 12 compartments can be provided in a single tray. It will be understood that another appropriate number of compartments can also be applied in a tray according to the invention.

Each compartment of the tray is provided with a number of clamping elements that are configured for clamping a pot in one of the compartments. The clamping force of the clamping elements acting on the pot in the compartment preferably results from a reversible deformation of the clamping elements. This deformation enables the use of pots of different sizes, more specifically pots with different diameters. This significantly improves the flexibility of the trays according to the invention as different sized pots can be transported and stored in a single type of tray. This increases the efficiency of the manufacturing process and reduces the number of stock keeping units, thereby reducing storage and transport costs.

The clamping elements in the tray according to the present invention can be provided in different embodiments. In one of the presently preferred embodiments the clamping elements are configured as compartment side walls that are provided with an opening such that a deformation of the side wall is made possible. The deformation depends on the size of the pot that is placed into the compartment. The opening is preferably provided in or close to the bottom of the compartment and extends over a substantial length along the sidewall in a substantial horizontal direction (when the tray is in use). In another presently preferred embodiment the clamping elements are provided as a sort of clamping fingers that are connected to the tray on at least their upper edge (when the tray is in use) and optionally also on their side edges (when the tray is in use).

For example, pots with different sizes such as 11-5°, 12-5°, 13-5°, 13-8° can be received in a universal (one size) compartment of the tray according to the invention. It will be understood that other dimensions or configurations for pots can also envisaged in accordance with the present invention.

A further advantageous effect of the deformable clamping elements is that for the larger pots a larger deformation of the clamping elements will occur such that a larger clamping force is achieved to hold the pot in the compartment. In fact, the clamping force automatically adjusts to the pot size.

At least the carrier part of the tray is manufactured from moulded pulp material. Moulded pulp material originates from recycled paperboard and/or newspapers. This renders the trays more sustainable for transport, storage and display of pot plants. The moulded pulp material is substantially made from recycled material and can be recycled after its use.

According to the invention the tray further comprises:
- at least one drain opening for removing an excess of water from the tray; and
- at least one drain element for transport of the excess of water to the at least one drain opening.

The tray comprises at least one drain opening for removing an excess of water from the tray. Preferably, each compartment comprises at least one drain opening such that excess water can be removed from the compartment and does not remain inside the compartment during transport, storage or display. It was shown that this excess of water is to a substantial extent responsible for the reduction in strength and stability of the trays for pot plants. This excess water originates from the pot plants, watering thereof and/or the environment, for example. Enabling excess water to exit from the tray, more specifically the compartment, improves maintaining the tray quality. This enhances the possibilities for trays that are made of moulded pulp material for use in transport, storage and display of pot plants. Furthermore, providing one or more drain openings and elements contributes to the flexibility of the tray to handle different sizes and/or designs of the pots. For example, providing relatively small pots in a compartment may otherwise result in additional accumulation of water in the compartments. Therefore, providing the one or more openings and elements improves the flexibility for handling different sizes of pots without affecting the strength and stability of the tray.

The tray further comprises at least one drain element for transport of the excess of water towards the at least one drain opening. The drain element improves the removal of excess water from the tray and thereby further improves the maintenance of the stability and strength of the tray during its use. These drain elements may comprise a number of elements and may include gutters (channels), grooves, openings etc.

In the presently preferred embodiment the drain element comprises a cup shaped and/or an angled drain surface.

By applying a cup shaped and/or an angled drain surface the excess water that comes into contact with this surface will be removed from the surface towards the drain opening. Preferably, each compartment comprises a cup shaped and/or an angled surface, preferably in the bottom of the compartment. In combination with providing each compartment with at least one drain opening, excess water can be removed efficiently from the bottom of the compartment.

Optionally, more than drain element, such as an angled drain surface, and/or one drain opening can be provided within each compartment, for example 2, 3, 4 or even more. Such combination of providing the bottom of a compartment of the tray with at least a cup shaped surface and/or one angled drain surface with at least one drain opening improves the removal of excess water from the drain, thereby improving the maintenance of the strength and stability during use of the tray.

In a preferred embodiment of the invention the clamping elements comprise clamping fingers.

The use of a number of clamping fingers enables effective and efficient holding a pot in a compartment. In one of the presently preferred embodiments the clamping fingers extend from the upper side of the tray inwards into the compartment. The clamping fingers are provided at an angle relative to the vertical such that the clamping force that acts upon the pot increases towards the bottom of the compartment. The clamping finger(s) is/are connected to the tray preferably at one or three sides of the clamping finger. Preferably, at least a substantial part of the bottom edge of the clamping finger is free to allow bending/deformation of the clamping element/finger.

Preferably, the number of clamping elements in an individual plant receiving compartment is in the range of 3-10, preferably in the range of 3-6, and is most preferably 3. Providing three clamping elements, such as clamping fingers, in each compartment enables a strong and reliable hold of the pot in the compartment.

According to the invention the tray further comprises a circumferential rim and a circumferential gutter.

By providing a circumferential rim and a circumferential gutter the pot plants of adjacent trays are better protected. In the context of the present invention a gutter is a sort of channel. This enables the circumferential gutter to improve removal of excess water from the tray. Furthermore, the circumferential rim and gutter also act as denest elements, enabling stacking and de-stacking of the tray more effectively. Therefore, the gutter/channel provides a combination of advantageous effects including removal of excess water and acting as denest element.

In a further preferred embodiment of the invention the moulded pulp comprises an amount of biomass material of plant origin.

Manufacturing moulded fiber products, more specifically the tray for pot plants according to the invention, from a biomass material of plant origin improves the sustainable character of the tray. Furthermore, the use of biomass material of plant origin improves the flexibility of incorporating (possible raw) materials in such products, thereby providing additional or alternative raw material sources for the tray. In addition, the use of biomass of plant origin improves the natural feel for the consumer or user of the tray. Also, especially in case the biomass of plant origin originates from a rest flow, the sustainability of the tray is further enhanced. As a further effect of using biomass material of plant origin the amount of mineral oils and the resulting moulded fiber tray is reduced. These mineral oils are used in conventional printing ink of recycled paper material involving components like MOSH (Mineral Oil Saturated Hydrocarbon), and MOAH (Mineral Oil Aromatic Hydrocarbon). More specifically, these mineral oils are used as solvent in printing inks used for printing paper and board packaging and end up in recycled paper that is used by the paper industry and moulded fiber industry. The use of biomass material of plant origin reduces the risk of these mineral oils ending up in the recycle flow of trays. This further improves the sustainability of the trays according to the invention.

In a presently preferred embodiment the biomass plant origin is responsible of 10 wt.% of the moulded pulp fiber tray, preferably at least 20 wt.%, more preferably at least 50 wt.%, even more preferably at least 80 wt.%, even more preferably at least 85 wt.%, and most preferably at least 92.5 wt.%. Preferably, the biomass of plant origin comprises so-called non-wood biomass, more specifically non-wood lignocellulosic biomass. This further improves the natural feel and sustainability of the resulting tray.

In a presently preferred embodiment of the invention, the biomass of plant origin may involve plants from the order of Poales including grass, sugar cane, bamboo and cereals including barley and rice and/or are plants of the order Solanales including tomato plants of which the leaves and/or stems could be used. Other examples include plants from the Order Arecales including palm oil plants of which leaves could be used, for example plants from the Order Maphighiales including flax, plants from the Order of Rosales including hemp and ramie, plants from the Order of Malvales including cotton, kenaf and jute. Alternatively, or in addition, biomass of plant origin involves so-called herbaceous plants including, besides grass type plants and some of the aforementioned plants, also jute, Musa including banana, Amarantha, hemp, cannabis etcetera. In one of the presently preferred embodiments, the (lignocellulosic) biomass of plant origin comprises biomass originating from plants of the Family of Poaceae (to which is also referred to as Gramineae). This family includes grass type of plants including grass and barley, maize, rice, wheat, oats, rye, reed grass, bamboo, sugar cane (of which residue from the sugar processing can be used that is also referred to as bagasse), maize (corn), sorghum, rape seed, other cereals, etc. Especially the use of so-called nature grass provides good results when manufacturing packaging units such as trays for pot plants. Such nature grass may originate from a natural landscape, for example. This family of plants has shown good manufacturing possibilities in combination with providing a sustainable product to the consumer or end-user.

In one of the presently preferred embodiments of the invention, the moulded pulp material comprises an amount of a surface roughness reducing agent.

According to such embodiment of the present invention the moulded material of the tray comprises an amount of a surface roughness reducing agent. By providing an amount of surface roughness reducing agent in the moulded pulp material for the tray, the overall surface roughness of the tray is reduced. This increases the quality perception of a consumer. Surface roughness can be measured with the so-called Bendtsen measurement process. The surface roughness reducing measures of embodiments of the present invention reduce the Bendtsen measurement value (in ml/min). For example, a conventional rough moulded fiber material may have a Bendtsen value of about 2000 ml/min, while a material for the tray may have a value of 200 ml/min or even less. It will be understood that other values can also be envisaged depending on a number of parameters.

Furthermore, the reduced surface roughness improves the opportunity to provide markings or signs in the tray with a good quality. This further increases the quality perception of a consumer. Furthermore, this improves the possibility to include consumer information on the tray informing the user of the origin of the pot plants and/or trays, for example.

In one of the presently preferred embodiments of the invention the surface roughness reducing agent comprises a biodegradable aliphatic polyester.

The use of a surface roughness reducing agent comprising a biodegradable aliphatic polyester provides a tray with a further reduced surface roughness. This contributes to the overall quality perception by a consumer.

In a presently preferred embodiment of the invention the biodegradable aliphatic polyester comprises an amount of one or more of PHB, PHA, PCL, PLA, PGA, PBS, and PHBV. It is shown that these components effectively reduce the surface roughness of the tray. In presently preferred embodiments the weight percentage of one or more of the aforementioned components is in the range of 0.5-20%, more preferably in the range of 1-15%. In addition or as an alternative an amount of PET and/or RPET is added to the moulded pulp, preferably in a similar range.

In a further preferred embodiment of the invention the tray comprises a surface roughness reducing agent comprising a biodegradable aliphatic polyester that is biocompostable.

In the context of this invention degradable relates to degradation resulting in loss of properties, while biodegradable relates to degradation resulting from the action of microorganisms such as bacteria, fungi and algae. Compostable relates to degradation by biological process to yield CO₂, water, inorganic compounds and biomass.

The tray according to the invention is preferably compostable thereby improving the sustainable character of the tray. This provides a biodegradable alternative material to plastics, for example. This improves recycling properties of the trays that are made from moulded pulp (including so-called virgin fiber material and/or recycled fiber material) and comprise a biodegradable aliphatic polyester.

A further advantage of adding an amount of biodegradable aliphatic polyester is that the tray can also be decomposed using microorganisms in soil, for example. This enables decomposing the tray comprising a biodegradable aliphatic polyester as a whole. In such preferred embodiment, the tray can even be decomposed at home, thereby rendering the tray home-compostable. Such home-compostable tray further improves the overall sustainability and enables replacing the use of less sustainable materials, such as PP, PE, PS.

The biodegradable aliphatic polyester can be mixed in the original moulded pulp material such that it is distributed over substantially the entire tray and/or can be provided as a separate layer on the side of the tray that may come into contact with plant material, for example.

A further advantage of the present invention is the improvement of barrier properties. Water barrier properties can be improved to reduce the penetration of water into the packaging unit and thereby reducing ridging problems and/or loss of strength and stability during use, for example.

Another advantage when using a biodegradable aliphatic polyester in a tray is the improved constancy of size or dimensional stability.

Preferably, the amount of biodegradable coating is between 1 and 10 wt%, preferably between 2 and 8 wt%, and is most preferably about 5 wt%.

In a further preferred embodiment the tray of the invention comprises a number of pots, preferably provided with plants.

The invention further relates to a method for manufacturing a tray for pot plants according to an embodiment of the invention, the method comprising the steps of:
- providing a mould;
- preparing the moulded pulp;
- moulding the tray; and
- drying the tray.

The method provides the same effects and advantages as described for the tray. In a presently preferred embodiment providing the moulded pulp comprises the application of biomass material of plant origin.

Further advantages, features and details of the invention are elucidated on the basis of preferred embodiments thereof, wherein reference is made to the accompanying drawings, in which:
- Figure 1 shows an embodiment of the tray according to the present invention;
- Figures 2A-C show different views of the tray of figure 1;
- Figure 3 shows a compartment of the tray of figure 1 with pots; and
- Figure 4 A-B shows further embodiments of a compartment of the tray according to the invention.

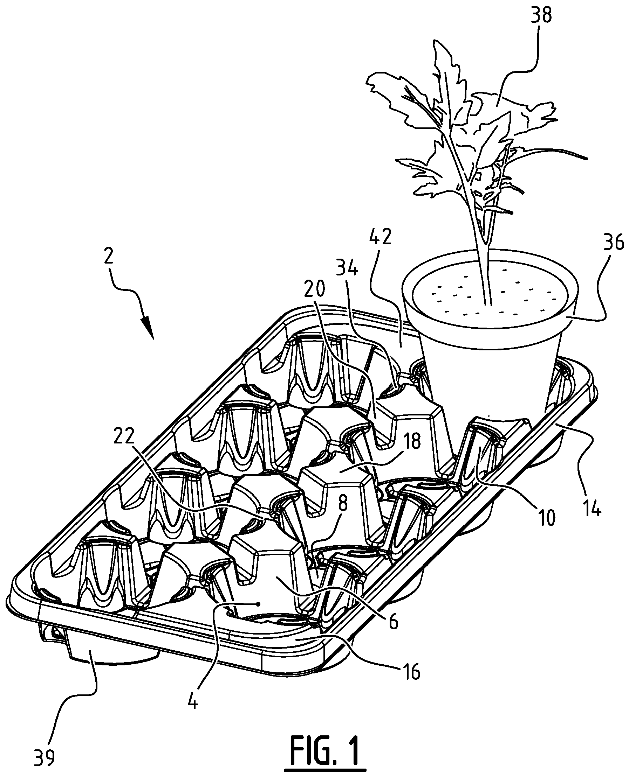

Tray 2 (figure 1) comprises a number of pot plant receiving compartments 4. Compartments 4 comprise side wall 6, bottom 8 and a number of finger shaped clamping elements 10. In the illustrated embodiment each compartment 4 is provided with a number of drain openings 12.

Tray 2 further comprises circumferential rim 14 extending around the outer edge of tray 2 and circumferential gutter 16. In the illustrated embodiment gutter 16 runs substantially parallel to rim 14. Between compartments 4 there are provided structures or domes 18 that are provided with large connecting gutters 20 and small connecting gutters 22.

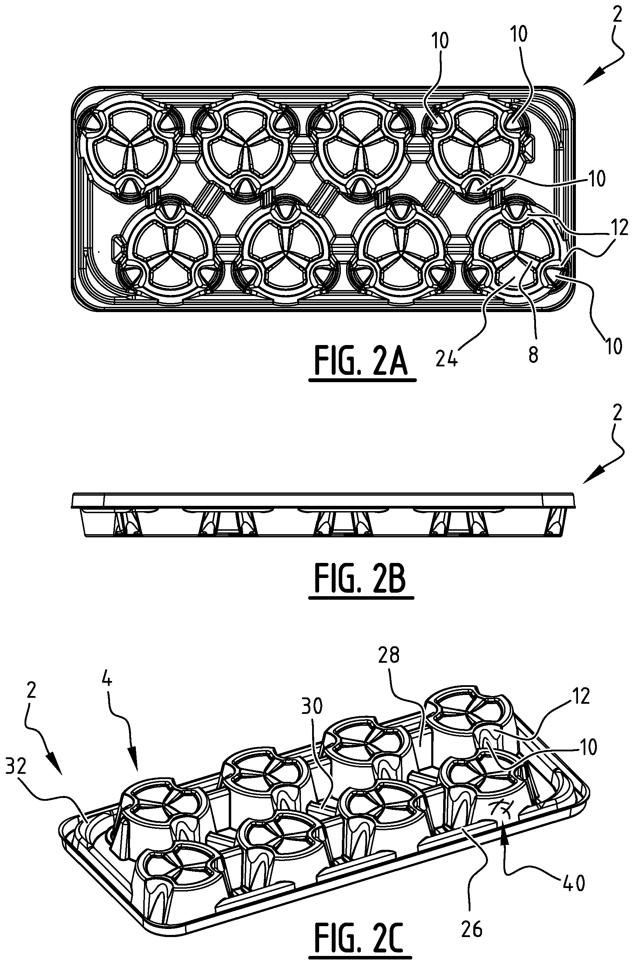

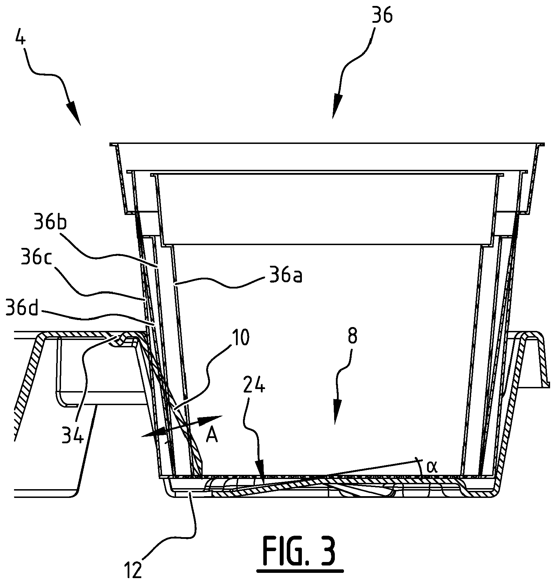

Compartments 4 comprise a number of angled drain surfaces 24 that are provided at an angle α (figures 2A-C and 3).

Furthermore, in the illustrated embodiment of tray 2, stability nocks/edges 26 (figure 2C) are provided. Large connecting part 28 contributes to the improved stability and strength of tray 2, optionally in cooperation with small connecting parts 30 and/or strengthened corners 32 of tray 2.

Finger shaped clamping elements 10 are connected to tray 2, preferably in the vicinity of groove 34 to improve the clamping force and/or deforming characteristics. In addition, grooves 34 may contribute to the removal of excess water.

Pot 36 with plant 38 (figure 1) can be placed in compartment 4. Due to the deforming characteristics of clamping elements 10 in direction A different sized pots 36 can be provided in a standardized compartment 4. For example, pots 36a (pot 11-5°), 36b (pot 12-5°), 36c (pot 13-5°), 36d (pot 13-8°) have been schematically illustrated in compartment 4 (figure 3) of tray 2. It will be understood that other dimensions or configurations for pot 36 can also envisaged in accordance with the invention.

In the illustrated embodiment coating 39 is applied to tray 2 (figure 1). Furthermore, fibers 40 are provided in the pulp material of tray 2 (figure 2C). In this embodiment fibers 40 originate from grass material and/or tomato plant material. The use of other type of fibers can also be envisaged in accordance with the present invention. Optionally, marking area 42 is provided in tray 2 to enable the possibility to provide further information to a consumer or user of tray 2 (figure 1).

For manufacturing tray 2, first an amount of moulded pulp is provided, optionally including agents, preferably biodegradable materials. The moulded pulp is provided to a mould such that the tray can be moulded. After moulding the tray, the tray is dried. This may involve inmould drying or a separate drying step.

In use, tray 2 is provided from a stack, for example. Pots 36 optionally with plants 38 are put in a compartment 4 of tray 2. When positioning pot 36 clamping elements 10 are deformed and pushed away from the centre of compartment 4. As this deformation of clamping elements 10 is reversible, a clamping force will be created, and will be applied to pot 36 in order to clamp pot 36 in compartment 4 of tray 2.

In the illustrated embodiment tray 2 comprises eight compartments 4, wherein each compartment 4 is provided with three clamping elements 10, three openings 12 and three angled surfaces 24. Excess of water can be removed from tray 2, more particularly from compartment 4 thereof by the cooperation of these different elements to improve this removal of excess water.

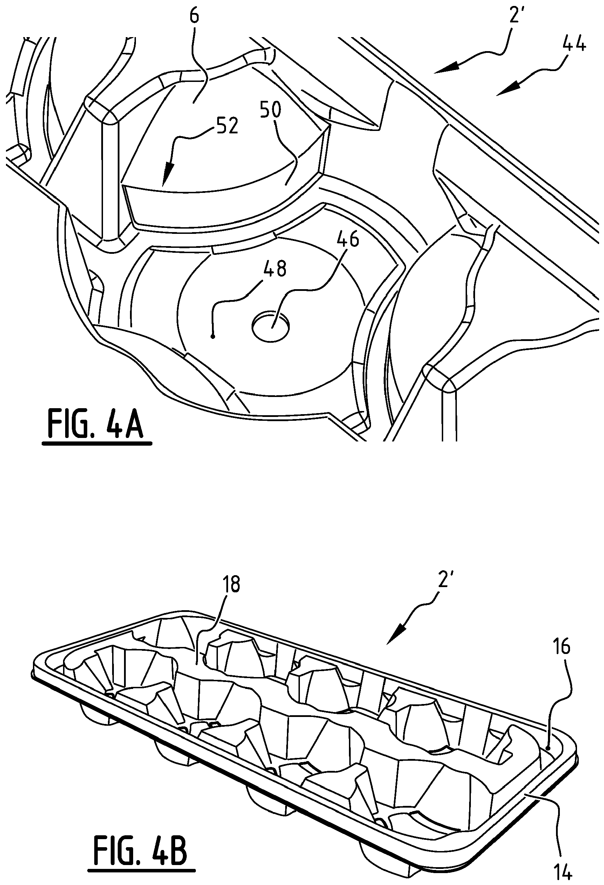

Compartment 44 (figure 4 A-B) of tray 2' is provided with central opening 46 designed to remove liquid, such as water, from the compartment. Bottom 48 of compartment 44 is preferably cup shaped to direct liquid towards opening 46. Cup shaped bottom 48 acts as a drain surface, similar to drain surface 24. In the illustrated embodiment, presently preferred additional side openings 50 (figure 4A) in wall 6 are provided to provide additional removal of liquid from compartment 44. Side wall 6 of compartment 44 is provided at an angle relative to the vertical (when the tray is in use). Optionally, lower part 52 (figure 4A) of side wall 6 is provided with opening 50. This provides a substantial clamping force when pots are placed in compartment 44. Alternatively, opening 50 is provided in bottom 48 and/or extends to bottom 48 from wall 6 of compartment 44 (figure 4B). This provides a clamping force and may provide additional stability to compartment 44. Opening 50 extends over a large part of side wall 6 close to bottom 8, 48 of compartment 44 to enable bending/deformation of side wall 6 that thereby acts as clamping element. This enables the positioning of pots of different sizes in compartment 44. It will be understood that features or elements of trays 2, 2' can be exchanged. For example, bottom 8 of tray 2 can be provided with central openings 46. Opening 50 can have different sizes and shapes. Also, connecting gutters 20, 22 can be provided to or omitted from trays 2, 2'.

The present invention is by no means limited to the above described preferred embodiments thereof. The rights sought are defined by the following claims, within the scope of which many modifications can be envisaged.

## Claims

1. Tray for pot plants, comprising:
- a carrier part provided with a number of pot plant receiving compartments, wherein the carrier part is made from a moulded pulp;
- a number of clamping elements for clamping the pot plants in one of the pot plant receiving compartments,
wherein the clamping elements are configured to receive and clamp pots of different sizes in a plant receiving compartment;
- at least one drain opening for removing an excess of water from the tray; and
- at least one drain element for transport of the excess of water to the at least one drain opening; and
- a circumferential rim and a circumferential gutter.

2. Tray according to claim 1, wherein the at least one drain element comprises a cup shaped and/or an angled drain surface.

3. Tray according to claim 2, wherein compartments are provided with a bottom comprising at least one cup shaped and/or angled drain surface with at least one drain opening.

4. Tray according to one of the foregoing claims, wherein the clamping elements comprise a side wall that is provided with an opening such that the side wall is deformable.

5. Tray according to one of the foregoing claims, wherein the clamping elements comprise clamping fingers.

6. Tray according to one of the foregoing claims, wherein the number of clamping elements in an individual pot plant receiving compartment is in the range of 3-10, preferably in the range of 3-6, and is most preferably 3.

7. Tray according to one of the foregoing claims, wherein the moulded pulp material comprises a biomass material of plant origin.

8. Tray according to claim 7, wherein the biomass of plant origin is responsible of 10 wt% of the moulded pulp tray, preferably at least 20 wt%, more preferably at least 50wt%, even more preferably at least 80 wt%, even more preferably at least 85 wt%, and most preferably at least 92.5 wt%.

9. Tray according to claim 8, wherein the biomass material of plant origin comprises plants from the order of Poales and/or Solanales.

10. Tray according to one of the foregoing claims, further comprising a surface roughness reducing agent comprising a biodegradable aliphatic polyester, wherein the biodegradable aliphatic polyester preferably comprises an amount of one or more of PHB, PHA, PCL, PLA, PGA, PBS and PHBV.

11. Tray according to claim 9 or 10, wherein the agent is provided as a biodegradable coating on the tray, wherein the biodegradable coating is preferably biocompostable.

12. Tray according to claim 11, wherein the amount of biodegradable coating is between 1 and 10 wt%, preferably between 2 and 8 wt%, and is most preferably about 5 wt%.

13. Tray according to one of the foregoing claims, further comprising a number of pots.

14. Method for manufacturing a tray for pot plants according to one or more of the foregoing claims, comprising the steps of:
- providing a mould;
- preparing the moulded pulp;
- moulding the tray; and
- drying the tray.

15. Method according to claim 14, further comprising the step of providing the moulded pulp comprising a biomass material of plant origin.
